# EUROPEAN PATENT SPECIFICATION

(11) **EP 3 126 804 B1**
(45) Date of publication and mention of the grant of the patent: **17.02.2021**
(21) Application number: 15715917.9
(22) Date of filing: 24.03.2015
(51) Int. Cl.: G01L 9/00, G01L 9/14

(54) **A PRESSURE SENSOR AND A BLOWER USING THE SAME**
DRUCKSENSOR UND GEBLÄSE DAMIT
CAPTEUR DE PRESSION ET VENTILATEUR L'UTILISANT

(30) Priority: 04.04.2014 CN 201410136795; 22.10.2014 CN 201410566918; 10.12.2014 CN 201410756706
(43) Date of publication of application: 08.02.2017
(73) Proprietor: Illinois Tool Works Inc., Glenview, IL 60025 (US)
(72) Inventor: LAI, Yong, Illinois 60025 (US); WANG, Guoshuai, Glenview Ilinois 60025 (US)
(74) Representative: Trinks, Ole
(86) International application number: PCT/US2015/022208
(87) International publication number: WO 2015/153194

(56) References cited:
- EP-A1- 1 319 936
- WO-A1-2007/034294
- WO-A1-2008/084946
- WO-A1-2010/065822

## Description

### Technical Field

The present invention relates to a wind pressure sensor.

### Background Art

Existing wind pressure sensors use a wind pressure sensing device, wherein the wind pressure sensing device is directly placed in a wind source to sense wind pressure. For example, an existing wind pressure sensor uses a Hall element or silicon piezoresistive chip to sense a pressure difference. This sensing device usually requires the pressure to be measured to be relatively high and is not suitable for measuring a low pressure (such as a wind pressure (-50 PA) with a pressure of around 50 PA). Therefore, wind pressure sensors using an existing sensing device adopt a complex electromagnetic application technology and structure and require high manufacturing costs and, since the measuring accuracy and sensitivity are affected by the sensing device, are not suitable for low pressure sensing and control applications.

WO 2010/065822 A1 relates to a conventional pressure sensor for accurately detecting the hydraulic pressure (or fluid level) and vibration in electric household appliances, such as a washing machine or a drying machine, by means of a movable detecting mechanism. The pressure sensor comprises a housing divided into a first chamber connected to the household appliance and a second chamber fluidly connected to the ambient air by a membrane sensitive to hydraulic pressure. The movable detecting mechanism is provided in the second chamber.

WO 2007/034294 A1 also relates to a similar conventional pressure sensor for detecting the hydraulic pressure (or fluid level) in electric household appliances, such as a washing machine or a drying machine. Therein, the first chamber is subject to hydraulic pressure determined by the level of water in a tank of the household appliance and the second chamber is subject to atmospheric pressure.

EP 1 319 936 A1 relates to a pressure detector, which is configured to output whether a certain pressure is present or not. Therefore, the pressure detector requires a non-linear spring and a moving element subjected to the action of the non-linear spring. As such, the pressure detector outputs two distinct values.

Hence, there exists a need to provide a wind pressure sensor which is suitable for wind pressure (especially low wind pressure) sensing and control applications, and has low manufacturing costs, and high measuring sensitivity and accuracy.

### Contents of the invention

The invention is defined by the appended claims.

In order to achieve the above object, the present invention provides, among others, a wind pressure sensor 100, the sensor 100 comprising a housing 210 that receives a pressure-sensitive deformable membrane 211, wherein the housing 210 is divided by the membrane 211 into a first chamber 215 and a second chamber 212 in an air-tight manner; the wind pressure sensor 100 is configured with a first air vent 106 through which the first chamber 215 is in fluid communication with a first air pressure position P1 in an air flow channel; and the wind pressure sensor 100 is configured with a second air vent 104 to connect the second chamber 212 to atmospheric pressure (or ambient pressure) P0 or to a second air pressure position P2 in the air flow channel.

The wind pressure sensor 100 further comprises a first spring (working spring) 225 and a second spring (compensation spring) 235, the first spring 225 being housed in the first chamber 215 and the second spring 235 being housed in the second chamber 212.

The wind pressure sensor 100 of the present invention has advantages including: being able to detect a wind speed/amount variation with a very small pressure difference (generated by a negative pressure), such as 0 to not less than 1000 pa; a controlled output accuracy especially at a low pressure, for example, an output accuracy of 0.1% fs or less at a wind pressure of 20-30 pa; and good linearity and repeatability of output, especially linearity at a low pressure, benefiting from the use of two compensating springs and the selection of K values thereof. Furthermore, the wind pressure sensor 100 provided by the present invention has low manufacturing costs and high sensitivity, and is suitable for sensing and control of wind pressure.

### Description of the Drawings

Further features and advantages of the present invention will become apparent from the following embodiments and with reference to the accompanying drawings, in which:
figure 1A shows an external perspective view of a wind pressure sensor 100;
figure 1B shows a perspective view of the wind pressure sensor 100 with an outer cover 130 removed;
figure 2A shows a perspective cross-sectional view of a first embodiment of the wind pressure sensor 100 of figure 1B along the line A-A;
figure 2B shows a perspective cross-sectional view of a second example not covered by the claims of the wind pressure sensor 100 of figure 1A along the line A-A;
figure 3 shows a planar cross-sectional view of the first embodiment of the wind pressure sensor 100 of figure 1B along the line A-A;
figure 4 shows a diagram showing the assembling of various components of the wind pressure sensor 100 in figure 2A;
figure 5A shows a schematic diagram of a first connection between the wind pressure sensor 100 of figure 1A and an air inlet structure 500 of a blower;
figure 5B shows a schematic diagram of a second connection between the wind pressure sensor 100 of figure 1A and the air inlet structure 500 of the blower;
figure 5C shows a schematic diagram of a third connection between the wind pressure sensor 100 of figure 1A and the air inlet structure 500 of the blower;
figure 5D shows a schematic diagram of a fourth connection between the wind pressure sensor 100 of figure 1A and the air inlet structure 500 of the blower;
figure 5E shows a schematic diagram of a fifth connection between the wind pressure sensor 100 of figure 1A and the air inlet structure 500 of the blower;
figure 5F shows a schematic diagram of a sixth connection between the wind pressure sensor 100 of figure 1A and the air inlet structure 500 of the blower;
figure 6 shows a schematic block diagram of an induction circuit 600 disposed on a printed circuit board 231;
figure 7 shows a frequency output curve of the induction circuit 600; and
figure 8 shows a water heater 800 using the wind pressure sensor 100 of the present invention.

### Particular Embodiments

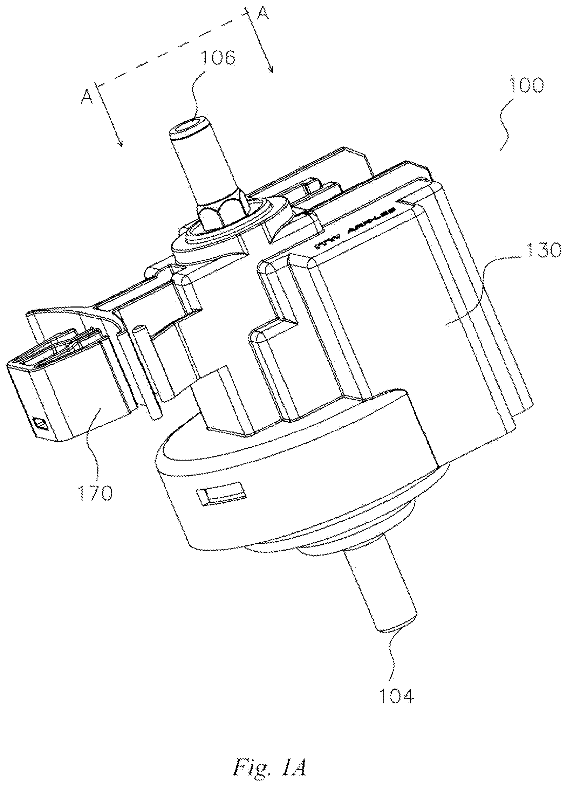

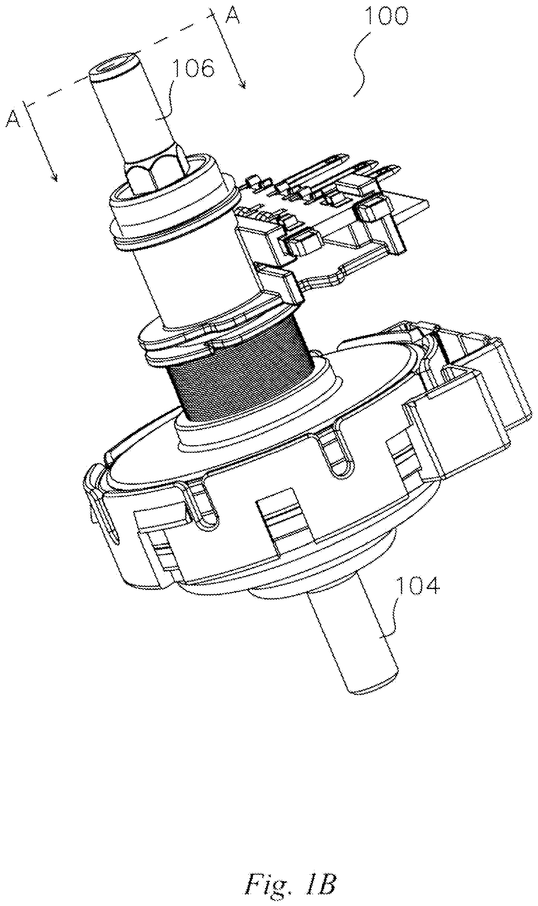

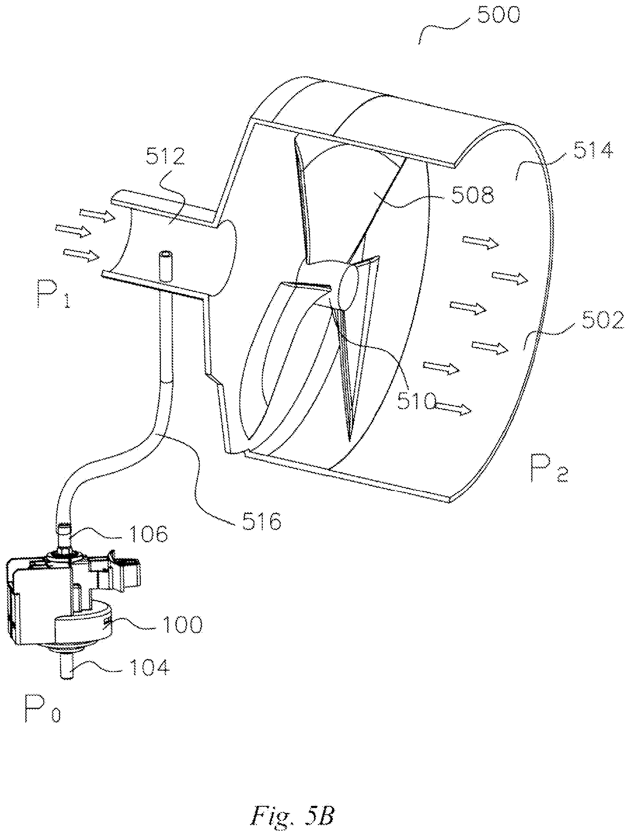

Figure 1A shows an external perspective view of a wind pressure sensor 100. As shown in figure 1, the wind pressure sensor 100 comprises an outer cover 130, and a first air vent 106 and a second air vent 104 are provided on the wind pressure sensor 100. The first air vent 106 is connected to a position P1 (see figure 5B) in an air flow passage of a blower; and the second air vent 104 is connected to atmospheric pressure P0 (see figure 5B) or to a further position P2 (see figure 5B) in the air flow passage of the blower. In the present invention, the pressure difference between the first air vent 106 and the second air vent 104 drives the wind pressure sensor 100 (P1 and P2 representing the pressure at a certain position, and P0 representing atmospheric pressure).

Figure 1B shows a perspective view of the wind pressure sensor 100 with the outer cover 130 removed.

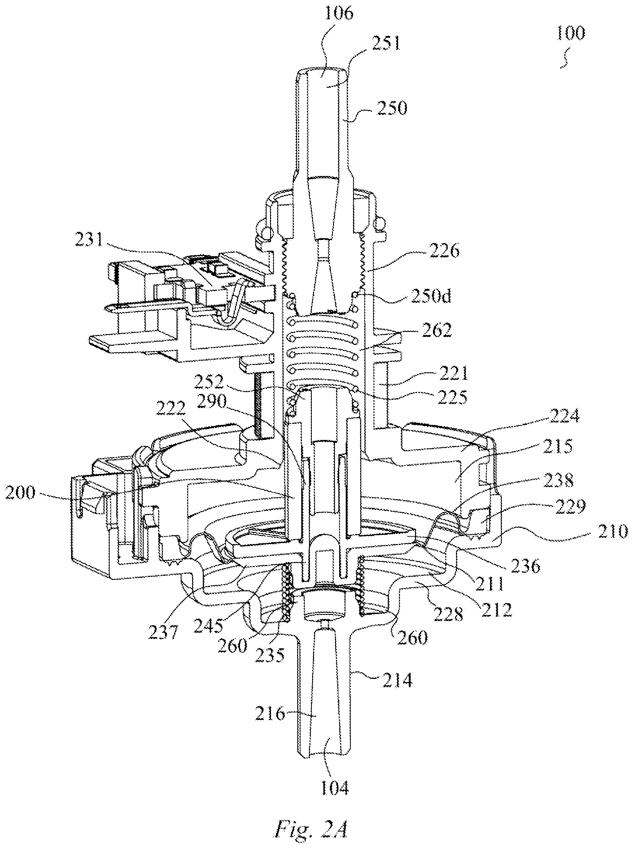

Figure 2A shows a perspective cross-sectional view of a first embodiment of the wind pressure sensor 100 of figure 1B along the line A-A, showing various components in the wind pressure sensor 100 in a perspective view. As shown in figure 2A, the wind pressure sensor 100 includes a rigid housing 210 which can be molded from a synthetic plastic material; the rigid housing 210 is provided with a pressure-sensitive deformable membrane 211, and the interior of the housing 210 is divided by the membrane 211 into a first chamber 215 and a second chamber 212 in an air-tight manner. The first chamber 215 is in fluid communication with the first air vent 106, and the first air vent 106 is in fluid communication with a position (a first position) in the air flow passage. The second chamber 212 is in fluid communication with the second air vent 104, and the second air vent 104 is in fluid communication with atmospheric pressure (P0), or with a further position (or a second position) in the air flow passage of the blower.

In one embodiment, the second chamber 212 is in communication with air (or atmosphere) and thus the second chamber 212 is always at the ambient pressure P0; on the other hand, the first chamber 215 is in fluid communication with one position (P1) in the air flow passage of the blower; therefore, when air flows in the blower, a negative pressure difference (P0-P1 = P-) will be generated between the first chamber 215 and the second chamber 212. In another embodiment, the first chamber 215 is in fluid communication with a position (or first position) P1 in the air flow passage of the blower, while the second chamber 212 is in fluid communication with a further position (or second position) P2 in the air flow passage of the blower; therefore, when an air flow is produced in the air flow passage of the blower, a pressure difference will be generated between the first chamber 215 and the second chamber 212. When there is no air flow in the blower, the pressures in the first chamber 215 and the second chamber 212 are the same, and the deformable membrane 211 is not deformed. However, when there is a pressure difference between the first chamber 215 and the second chamber 212, the deformable membrane 211 is deformed towards the chamber having a lower pressure.

The sensor 100 further comprises an inductance inductor 222 which comprises a ferromagnetic core 200 and a winding 221. The ferromagnetic core 200 is made of a ferromagnetic material and operatively associated to the deformable membrane 211, so as to be driven by the deformable membrane 211 to move in the housing 210 in response to the deformation of the deformable membrane 211; and the winding 221 is fixed to the housing 210 and operatively magnetoelectrically connected to the ferromagnetic core 200 to form a variable inductance inductor 222. In fact, the inductance of the winding 221 in the inductance inductor 222 varies depending on the amount by which the ferromagnetic core 200 (mounted coaxially with the winding 221) enters an inner space defined by the winding 221 itself. The movement of the deformable membrane 211 causes a corresponding movement of the ferromagnetic core 200 and the winding 221, therefore, a pulse signal with a variable amplitude and/or frequency is generated by the inductance inductor 222.

The first chamber 215 is defined by a first cup-shaped body (housing) 224 which is part of the housing 210, and houses the ferromagnetic core 200 and a first spring (working spring) 225 for the deformable membrane 211, the ferromagnetic core 200 being integrally carried by the deformable membrane 211; in particular, the first cup-shaped body 224 has a tubular end 226, the first spring 225 is coaxially housed in the tubular end 226 and an upper portion of the cup-shaped body 224 bears the winding 221, the winding being sheathed outside the tubular end 226 but above the first chamber 215. On the other hand, the second chamber 212 is equipped with a nipple 214 and is defined by a second cup-shaped body (sealing cap) 228 of the housing 210, the second cup-shaped body 228 is snap-connected to the first cup-shaped body 224 to sandwich an outer peripheral edge 229 of the deformable membrane 211 in an air-tight manner. The external structure of the sensor 100 is covered by the outer cover 130 (see figure 1A), and the outer cover 130 covers the tubular end 226 and houses a printed circuit board 231 for supplying power to the winding 221 and processing a signal generated by the winding 221.

The second chamber 212 houses a second spring (compensating spring) 235 of the deformable membrane 211, and the second spring 235 is located opposite to the first spring 225 and antagonist to the first spring 225 (especially when the sensor 100 is placed perpendicular to the ground for use). In order to support the ferromagnetic core 200 and to be able to cooperate with the springs 225 and 235, the membrane 211 integrally carries, at its opposite faces, a disk 236 and a membrane disk 237, which pinch the deformable membrane 211 from the opposite sides, thereby leaving a semicircular, flexible annular portion 238 free in proximity of the peripheral edge 229. A tubular pin 290 extends from one side of the disk 236, and the ferromagnetic core 200 is coaxially sheathed on the tubular pin 290 and is axially blocked between the disk 236 and a corresponding tubular magnetic core pressing member 252 of the tubular pin 290. The disk 236 may be made from a rigid material (such as plastic); and the membrane disk 237 may be made from an elastic (or flexible) material, the membrane 211 may be formed by integrally extending from the edge of the membrane disk 237, the material of the deformable membrane 211 may be the same as that of the membrane disk 237 and such a structure can facilitate manufacturing and assembly and reduce the manufacturing costs.

As described above, the housing 210 includes two cup-shaped bodies 224 and 228 defining chambers 212 and 215 (the first chamber 215 and the second chamber 212), the first cup-shaped body 224 and the second cup-shaped body 228 are snap-connected to each other so that the edge 229 of the membrane 211 is pinched there between in an air-tight manner, which divides the chambers 212 and 215 in an air-tight manner. The chamber 215 is connected with the atmosphere via a cavity 251 in an adjustment screw 250, and the chamber 212 is in communication with the outside via a cavity 216 in the nipple 214. A cavity 262 is provided in an upper portion of the first cup-shaped body 224 for mounting the components of the sensor 100 (including the compensating spring 225, the adjustment screw 250, and the tubular magnetic core pressing member 252, etc.), and for providing an air channel for the first chamber 215 to the outside.

The deformable membrane 211 integrally carries the membrane disk 237 on the side of the second chamber 212, and the membrane disk 237 is snap-connected to the disk 236 via a cylinder pin 245 extending axially downwards from the second chamber 212. The disk 236, the membrane disk 237 and the winding 221 are coaxial, the winding 221 is in turn externally carried by the tubular end of the first cup-shaped body 224, and the disk 236 is provided with a cylinder 290 extending upwards and opposite to the cylinder pin 245.

In the embodiment shown in figure 2A, the tubular ferromagnetic core 200 is mounted to the cylinder 290 in an axially slidable manner, and thereby the cylinder 290 serves as a guide pin. The guide pin 290 is integrally carried by the membrane 211 on the side of the winding 221 and is coaxial with the winding 221. With the movement of the membrane 211 between the first chamber 215 and the second chamber 212, the ferromagnetic core 200 can slide in the winding 221 back and forth or up and down.

Therefore, the ferromagnetic core 200 is carried by the membrane 211, and, as the ferromagnetic core 200 rests against the disk 236 and is engaged with the guide pin 290, when in use the ferromagnetic core 200 may move in response to the deformation of the membrane 211 caused by the pressure in the chamber 212.

In the embodiment shown in figure 2A, one end of the working spring 225 abuttingly rests against a shoulder of the tubular magnetic core pressing member 252 of the guide pin 290 facing towards the winding 221, while the other end of the working spring 225 abuttingly rests against a tubular end 250d of the adjusting screw 250 (a first protruding element), and the tubular magnetic core pressing member 252 is embedded in a cavity of the cylinder 290. The outer periphery of the adjustment screw 250 is provided with a thread and can be rotated into the mounting cavity 262 to adjust a preset biasing force of the working spring 225. The adjustment screw 250 is internally provided with a cavity 251, one end of the cavity 251 is in air communication with the first chamber 215, the other end of the cavity 251 is in fluid communication with the air flow passage of the blower, and thereby the first chamber 215 is in fluid communication with the air flow passage of the blower via the cavity 251 in the adjustment screw 250. In the present invention, the adjustment screw 250 is internally provided with the cavity 251 for connecting the first chamber 215, so that the mechanical structure of the sensor 100 is compact and reasonable.

When a certain pressure difference is set, by the adjusting action of the adjustment screw 250, the ferromagnetic core 200 is acted on by a compensating stabilizing force (balanced force) of the springs 225 and 235 and the balanced position of the ferromagnetic core 200 is adjusted and changed, so that the inductance of the inductance inductor 222 that works with the winding 221 is changed, and then in response, the points of a variation curve of output frequency and/or voltage are controlled within a set specification interval, in order to eliminate or reduce a deviation from an initial value or a discrete output distribution and disequilibrium caused by individual difference among various components. The first spring 225 and the second spring 235 form a balanced working force system after they are assembled, the so-called adjustment is adjusting the resultant force generated by the first and second springs, and if the second spring 235 is absent, the balance of forces requires the involvement of another support; imbalance is vulnerable to external influence and dead weight, especially under the condition of a variable pressure difference.

Similarly, the compensating spring 235 which is arranged on the side opposite to the working spring 225 is sandwiched between the deformable membrane 211 and a protruding element 260 (a second protruding element) at the bottom of the second chamber 212, and is arranged on the side opposite to the adjustment screw 250 and the winding 221.

In the sensor 100, one end of the compensating spring 235 abuttingly rests against the membrane disk 237, and the other end abuttingly rests against a bottom wall 260 (i.e. the protruding member 260) of the second chamber 212. The bottom wall 260 is provided with a nipple 214, a cavity 216 is provided inside the nipple 214, one end of the cavity 216 is in air communication with the second chamber 212, and the cavity 216 is in communication with the second air vent 104.

Finally, the housing 210 is provided with the outer cover 130 on which a mounting rack 170 (see figure 1A) is provided, the mounting rack being used to fixedly snap-connect the sensor 100 to a mounting frame of the blower.

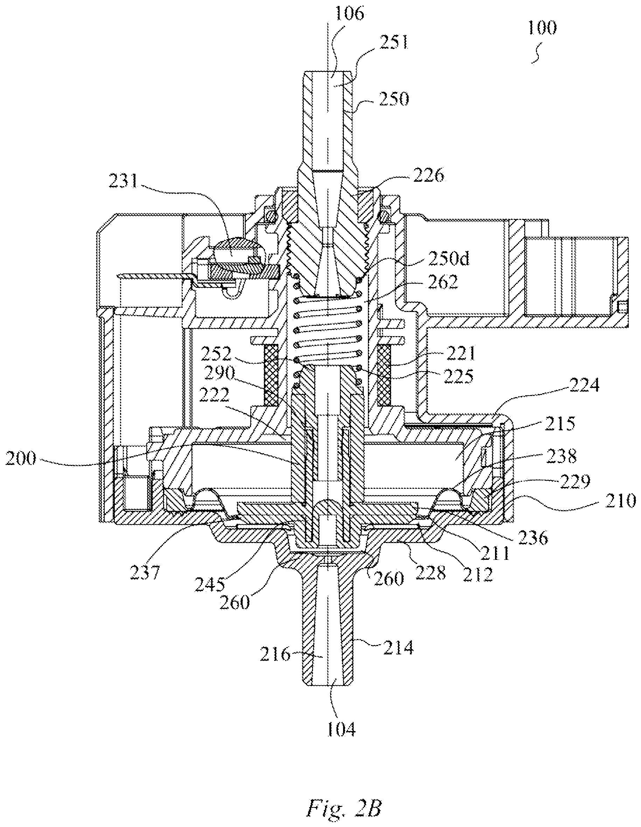

Figure 2B shows a perspective cross-sectional view of a second example not covered by the claims of the wind pressure sensor 100 of figure 1A along the line A-A. Compared with the first embodiment of figure 2A, all the elements and the structure of the second example not covered by the claims of figure 2B are identical to those of the first embodiment of figure 2A except that the second spring 235 (compensating spring) in the first embodiment is omitted in the second example not covered by the claims of figure 2B, so that the working principle of the second example not covered by the claims is substantially similar to that of the first embodiment, but when the first spring 225 works, there is no second spring 235 as in the first embodiment to balance the first spring. However, in the second example not covered by the claims, under the cooperation of the various components, the requirements for operation can also be met, and the structure is relatively simple.

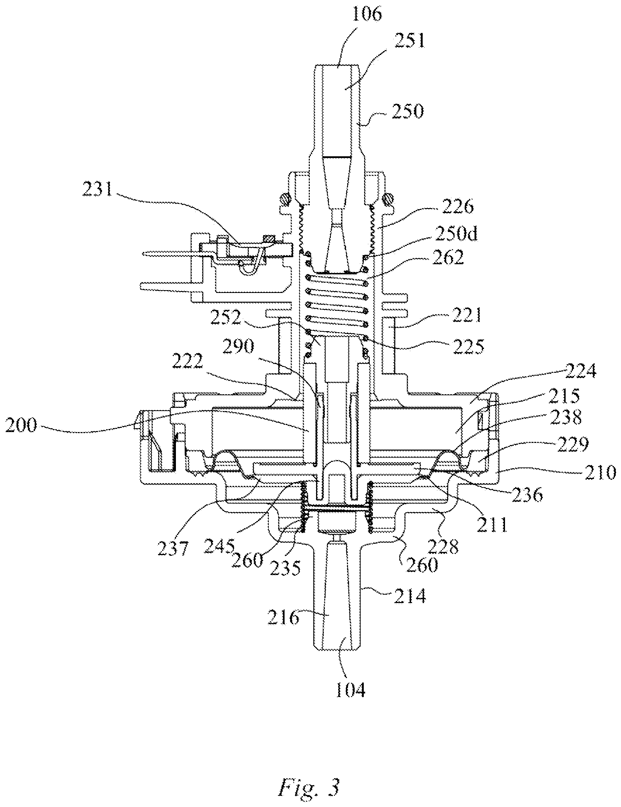

Figure 3 shows a planar cross-sectional view of a first embodiment of the wind pressure sensor 100 of figure 1A along the line A-A, showing various components in the wind pressure sensor 100 in a planar view.

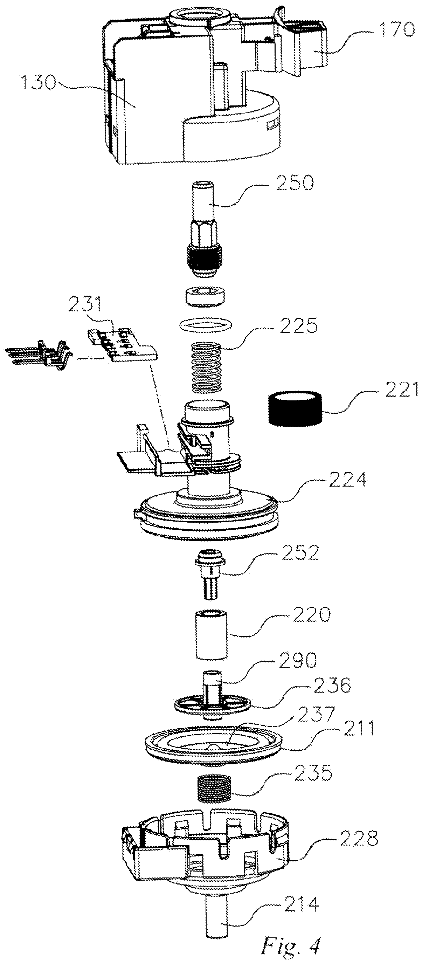

Figure 4 shows a diagram showing the assembling of various components of the wind pressure sensor 100 in figure 2A. It is to be stated that the diagram showing the assembling of various components in figure 4 is used to more clearly represent the relationship between them when assembling; the function and the mating relationship of the components are expressed in figures 1A-3, and detailed description of the components in figure 4 will be not repeated.

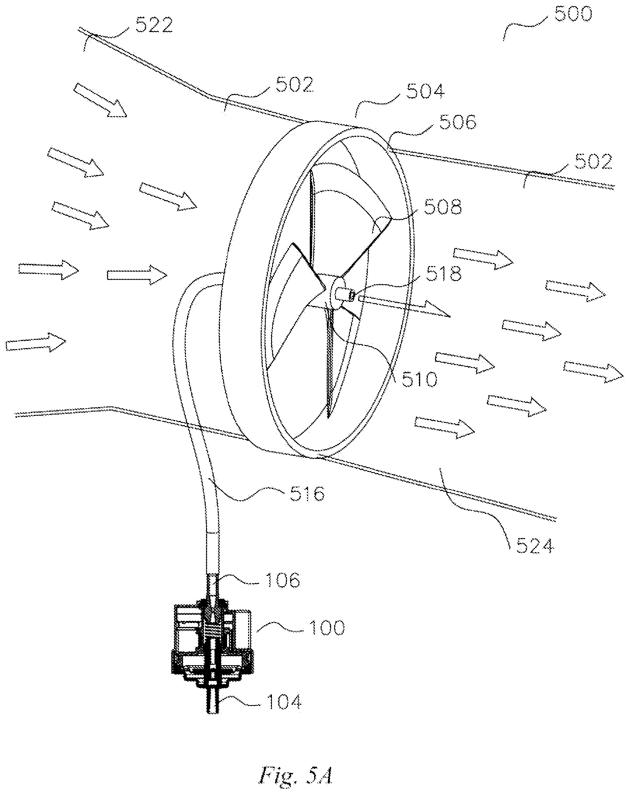

Figure 5A shows a schematic diagram of a first connection between the wind pressure sensor 100 of figures 2A and 2B and an air inlet structure 500 of the blower. As shown in figure 5A, the air inlet structure 500 of the blower comprises an air flue 502, and the air flue 502 includes an inlet 522 and an outlet 524; a fan 504 is disposed between the inlet 522 and outlet 524. The fan 504 includes a fan frame 506 and fan blades 508; the fan blades 508 are driven by a motor (not shown) to rotate, such that air is sucked in from the inlet 522 of the air flue 502 and fed into the blower from the outlet 524 of the air flue 502. The second air vent 104 is in communication with atmospheric pressure P0; one end (first end) of a flexible conduit 516 is connected to the first air vent 106, and the other end (second end) of the flexible conduit 516 is fixed on a central bracket 510 for the fan blades 508, that is to say the first chamber 215 is connected to the axial center of the air flue 502 via the outlet of the adjustment screw 250, so that the negative pressure P- in the air flue 502 generated by the air flow is connected to the first chamber 215. The outlet at the second end of the flexible conduit 516 is located at the center of the air flue 502 and is in the same direction as the air flowing in the air flue 502. Thus, the air flow at the outlet of the flexible conduit 516 is relatively stable and continuous, and is able to provide a stable, continuous air flow parameter for the first chamber 215 so as to improve the accuracy, linearity and sensitivity in measuring wind pressure and/or wind speed.

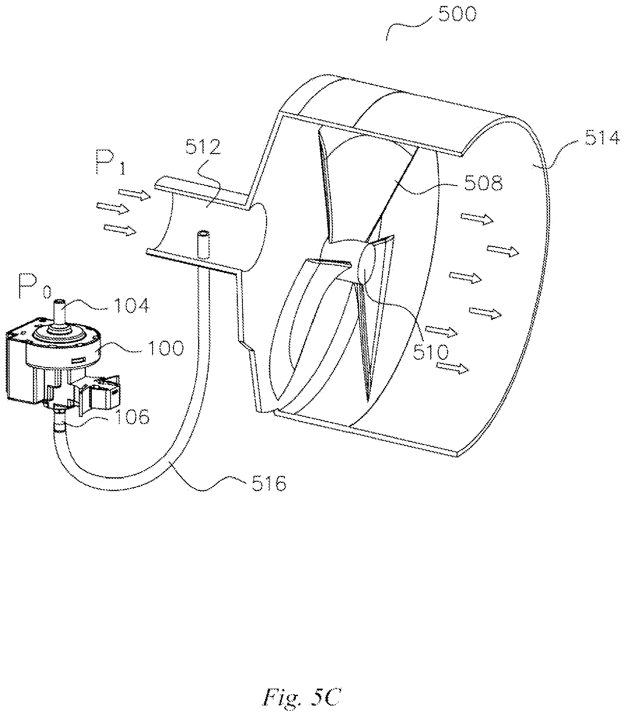

Figures 5B and 5C show schematic diagrams of a second and a third connection between the wind pressure sensors 100 of figures 2A and 2B and the air inlet structure 500 of the blower. As shown in figures 5B and 5C, the second air vent 104 is in communication with atmospheric pressure P0; and one end (first end) of the flexible conduit 516 is connected to the first air vent 106, and the other end (second end) of the flexible conduit 516 is fixed to the inlet 512 of the air flow passage in the blower.

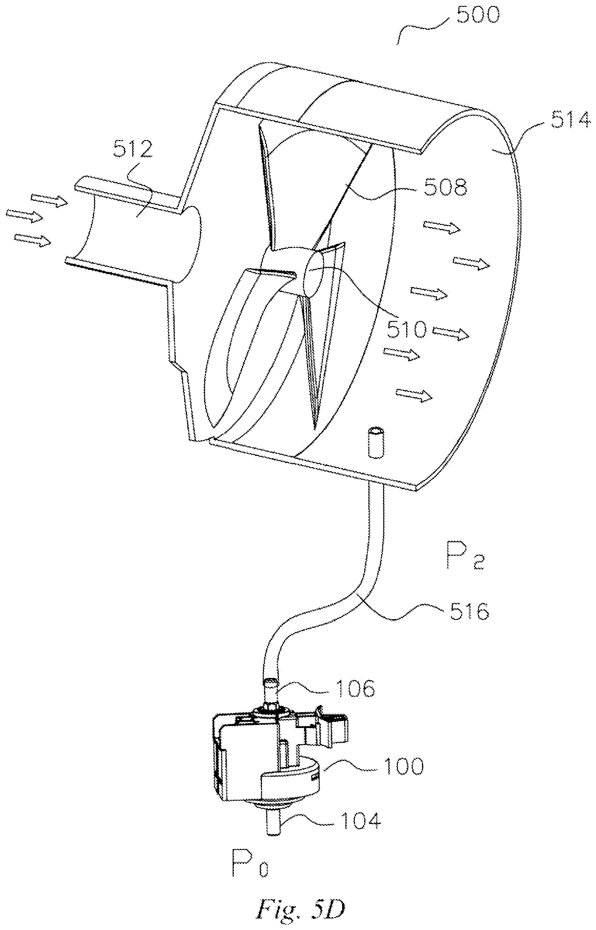

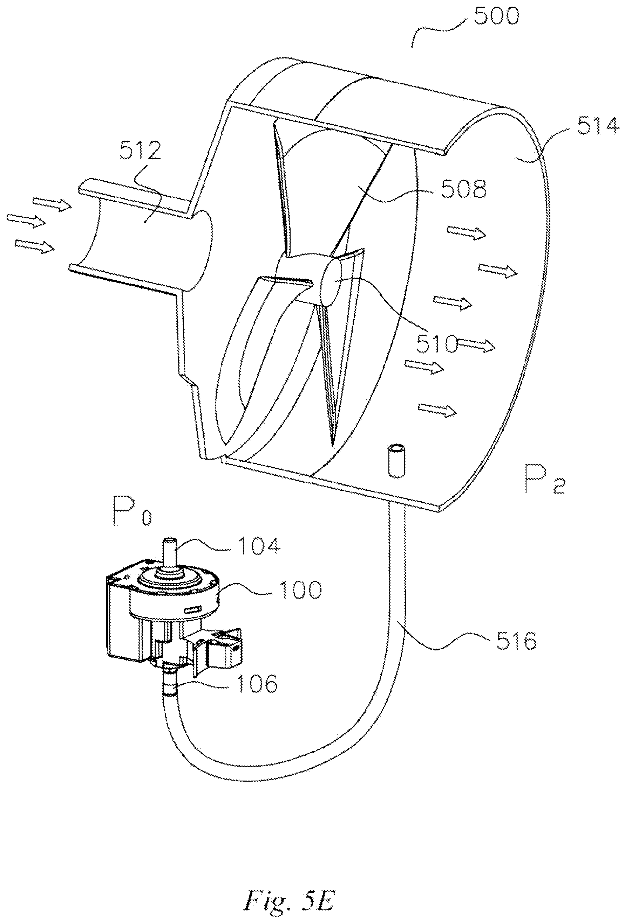

Figures 5D and 5E show schematic diagrams of a fourth and a fifth connection between the wind pressure sensors 100 of figures 2A and 2B and the air inlet structure 500 of the blower. As shown in figures 5D and 5E, the second air vent 104 is in communication with atmospheric pressure P0; and one end (first end) of the flexible conduit 516 is connected to the first air vent 106, and the other end (second end) of the flexible conduit 516 is fixed to the outlet 514 of the air flow passage in the blower.

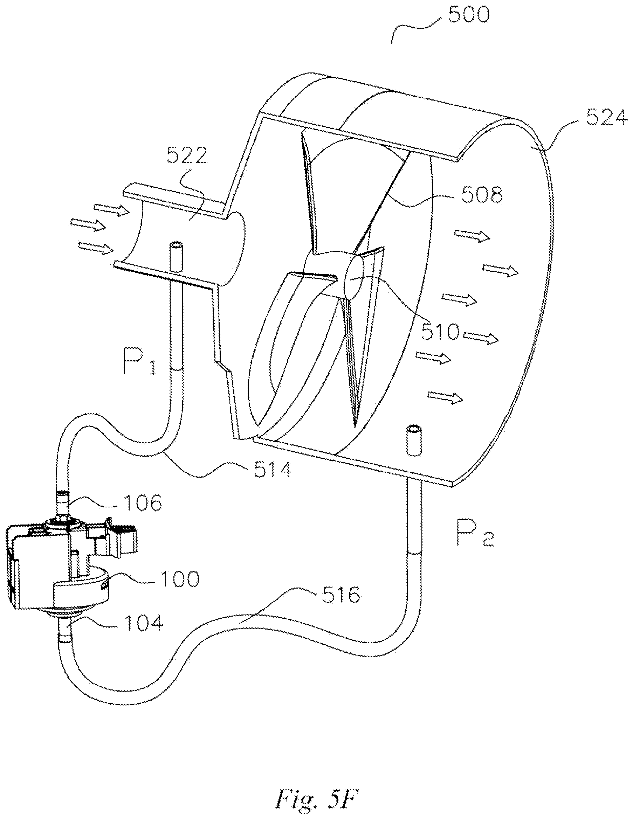

Figure 5F shows a schematic diagram of a sixth connection between the wind pressure sensor 100 of figures 2A and 2B and an air inlet structure 500 of the blower. As shown in figure 5F, the first air vent 106 is connected to one end (a first end) of a flexible conduit 514, while the other end (a second end) of the flexible conduit 514 is fixed to the inlet 522 of the air flow passage in the blower; and the second air vent 104 is in fluid communication with one end (a first end) of a flexible conduit 516, and the other end (a second end) of the flexible conduit 516 is fixed to the outlet 524 of the air flow passage of the blower.

It is to be noted that in figures 5A-F, the wind pressure sensor 100 is placed in an axial direction of the first air vent 106 and second air vent 104 thereof and perpendicular to the ground. In figures 5A, B, D, F, the first air vent 106 is placed horizontally and faces upwards; and in figures 5C, E, the second air vent 104 is placed horizontally and faces upwards. For the wind pressure sensor 100 shown in figure 5B, the first air vent 106 is placed horizontally and faces upwards so that the working spring 225 does not bear the weight of the components such as the ferromagnetic core 200 and the winding 221, and that the linearity of the output curve in the initial section is improved without the action of the compensating spring 235.

When the fan blades 508 are not rotated, the air in the air flue 502 does not flow and the pressure in the first chamber 215 is equal to that in the second chamber 212, and therefore the membrane 211 is at a balanced position and the ferromagnetic core 200 is at its initial position; at this time, the output of the induction circuit on the printed circuit board 231 is a starting frequency F0 (or a starting voltage V0). When the fan blades 508 are rotated, the air is sucked in from the inlet 522 of the air flue 502 and fed into the blower from the outlet 524 of the air flue 502, thus a pressure difference is generated between the first chamber 215 and the second chamber 212; the pressure difference drives the membrane 211 to move towards the first chamber 215, thus forcing the ferromagnetic core 200 into the winding 221, so as to change the inductance of the winding 221 in the inductance inductor 222, thereby linearly changing (increasing or decreasing) the starting frequency F0 (or starting voltage V0). When the wind speed is constant, the pressure difference is constant, the distance by which the membrane 211 moves towards the first chamber 215 is constant, and the ferromagnetic core 200 stops at a certain fixed position in the winding 221, so the output frequency Fsc (or output voltage Vsc) of the induction circuit is also constant. When the wind speed is increasing, the pressure difference is increasing, the membrane 211 further moves towards the first chamber 215, the ferromagnetic core 200 is pushed to a deeper position in the winding 221, the inductance of the winding 221 in the inductance inductor 222 is proportionally increased or decreased, so the output frequency Fsc (or output voltage Vsc) of the induction circuit is also proportionally increased or decreased (ideally linearly increased or decreased). When the wind speed slows down continuously, the pressure difference decreases continuously, the membrane 211 returns from the first chamber 215, the ferromagnetic core 200 returns to a shallower position in the winding 221, and the inductance of the winding 221 in the inductance inductor 222 is proportionally decreased or increased, so the output frequency Fsc (or output voltage Vsc) of the induction circuit is also proportionally decreased or increased (ideally linearly decreased or increased). When the air stops flowing in the air flue 502, the air pressure in the first chamber 215 trends towards being equal to the pressure in the second chamber 212, and the output of the induction circuit on the printed circuit board 231 returns to the starting frequency F0 (or starting voltage V0). The output frequency Fsc (or output voltage Vsc) of the induction circuit is output to a speed control circuit; the rotating speed of the fan blades 508 is controlled by the speed control circuit according to the output frequency Fsc (or output voltage Vsc) such that the fan blades 508 reach or dynamically remain at an ideal rotating speed.

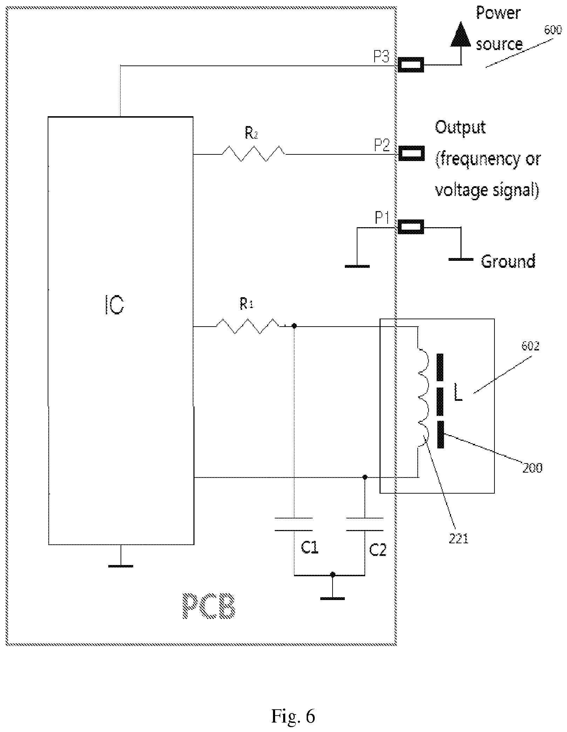

Figure 6 shows a schematic block diagram of an induction circuit 600 disposed on a printed circuit board 231. As shown in figure 6, the inductance inductor 222 comprises a ferromagnetic core 200 and a winding 221. As shown in figure 6, the induction circuit 600 includes a variable oscillation circuit 602, which includes the core 200 and the winding 221, a resistor R1, and capacitors C1 and C2. With the change of wind pressure, the core 200 moves in the winding 221, thereby changing the output frequency of the variable oscillation circuit 602. The output of the variable oscillation circuit 602 is connected to an IC, and is processed by the IC, thereby outputting a frequency (or voltage) signal via R2.

In figure 6, the inductance inductor L and the capacitors C1, C2, and a NOT gate in the IC form an oscillation circuit, which outputs a square wave frequency signal, the frequency being 1 / (2 × n × sqrt (LC)). As the core 200 moves in the winding 221, the inductance L will change, so that the frequency of the output square wave will vary. If the type is frequency output, then the square wave frequency signal is directly output (or output in the IC by frequency division); and if the type is voltage output, then the square wave frequency signal is converted into a voltage signal inside the IC and then output. There may be one or more ICs herein. The resistor therein serves for current limitation and protection.

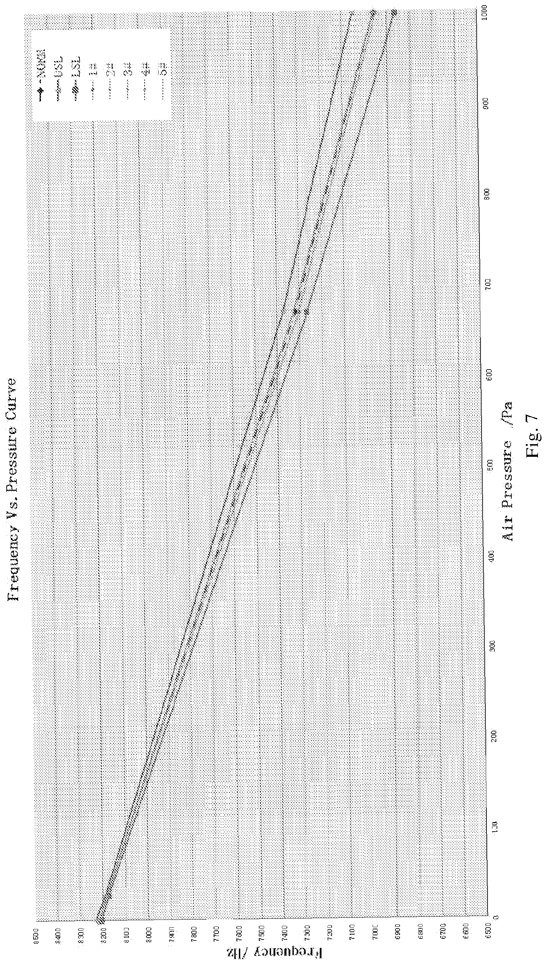

Figure 7 shows the output of the induction circuit 600. The curve in figure 7 is a frequency output curve collected by a professional testing instrument from a test on the wind pressure sensor 100 of the present invention, wherein the testing instrument simulates wind pressure as a function of time (usually at a rate of 0-30 Pa/Sec) to output a relationship profile plotted with the collected data of frequency as a function of time, representing the output characteristics of the sensor. As can be seen from the data curve, the output has a good linearity and accuracy, especially at a low wind pressure, and the specification curve data can be controlled to vary in a very small range, which is very suitable for controlling wind pressure of the blower.

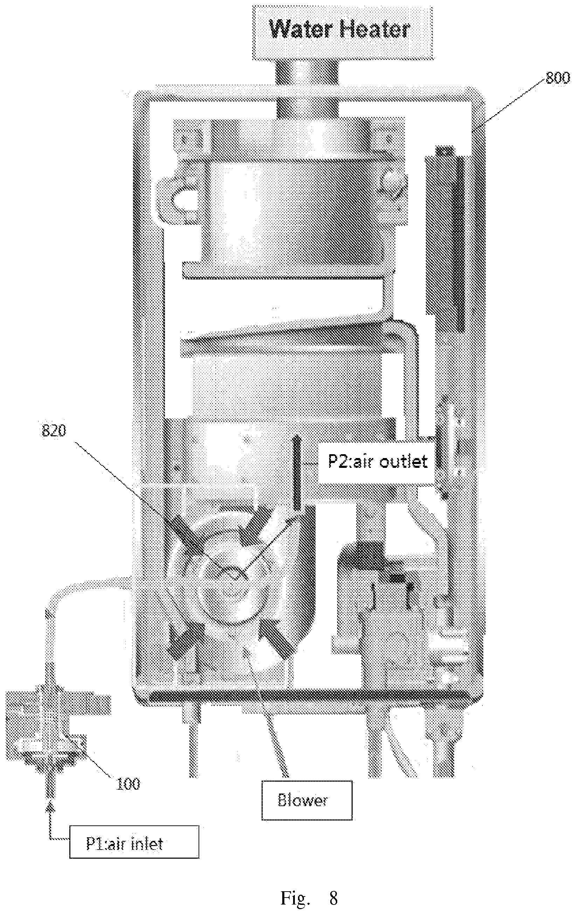

Figure 8 shows a water heater 800 using the wind pressure sensor 100 of the present invention. As shown in figure 8, the water heater 800 includes a blower 820. A cavity 251 of the sensor 100 is connected to an outlet 502 of the blower 820.

In the present invention, when in use, the wind pressure sensor 100 is placed in the vertical direction for use, the second spring 235 serves for the adjustment of the first spring 225, especially for the adjustment in the absence of wind, such that the first compensating spring 225 is at the linear starting point. Since the volumes of the first chamber 215, the second chamber 212 and the outlet of the adjustment screw 250 are limited, the air pressure difference generated by the first chamber 215 and second chamber 212 is within a small range. Therefore, it is very important to select the range of the K value of the first spring 225 and the second spring 235. In the present invention, the K value of the first spring 225 is K1, the K value of the second spring 235 is K2, and it is expedient that the difference (K1-K2) between K1 and K2 is in the range of 0.001-0.20 N/mm; and a difference (K1-K2) between K1 and K2 of 0.05 N/mm is preferred. As an example, the K value of the first spring 225 is in a range of 0.001-0.20 N/mm, and the K value of the second spring 235 is in a range of 0.001-0.10 N/mm. When a single spring is used as shown in figure 2B, the difference between K1 and K2 is (K1-0), i.e. the range of difference of the K values is the range of K1. The selection of the spring is very important for the present invention, and if the spring is selected inappropriately, the most direct result is that the output exceeds the requirements of the application, and the requirements for precise control of the wind speed (i.e. wind amount) cannot be fulfilled.

The wind pressure sensor of the present invention has advantages including: (1) being able to detect a wind speed/amount variation with a very small pressure difference (generated by a negative pressure), such as 0 to not less than 1000 pa; (2) a controlled output accuracy especially at a low pressure, for example, an output accuracy of 0.1% fs or less at a wind pressure of 20-30 pa; and (3) good linearity and repeatability of output, especially linearity at a low pressure, benefiting from the use of two compensating springs and the selection of K values thereof. Furthermore, the wind pressure sensor provided by the present invention has low manufacturing costs and high sensitivity, and is suitable for sensing and control of wind pressure.

## Claims

1. A pressure sensor (100) for sensing wind pressure, comprising:
- a housing (210) that receives a pressure-sensitive deformable membrane (211), wherein the housing (210) is divided by the membrane (211) into a first chamber (215) and a second chamber (212) in an air-tight manner;
- a first spring (225);
- a second spring (235);
- a magnetic core (200) made of a ferromagnetic material and operatively connected with the membrane (211) to move in response to the deformation of the membrane (211);
- a winding (221) operatively magnetoelectrically connected to the magnetic core (200) to form a variable inductance inductor (222); and
- a disk (236) located on the deformable membrane (211) in the first chamber (215);
- a membrane disk (237) located in the second chamber (212) on a side of the deformable membrane (211) opposite to the disk (236); and
- a tubular pin (290) extending from one side of the disk (236) towards the winding (221);
wherein the pressure sensor (100) is configured with a first air vent (106) through which the first chamber (215) is in fluid communication with a first air pressure P1 in an air flow channel;
wherein the pressure sensor (100) is configured with a second air vent (104) to connect the second chamber (212) to atmospheric pressure P0 or to a second air pressure P2 in the air flow channel;
wherein the first air vent (106) is disposed in an adjusting screw (250) comprising a cavity (251);
wherein a first end of the cavity (251) is in air communication with the first chamber (215) and a second end of the cavity (251) is in fluid communication with the first air pressure P1 in the air flow channel; wherein an end (250d) of the adjusting screw (250) contacts the first spring (225);
wherein the K value of the first spring (225) is K1;
wherein the K value of the second spring (235) is K2;
wherein the difference value (K1-K2) between K1 and K2 is in a range of 0.001-0.20 N/mm;
wherein the magnetic core (200) is located, mounted, attached or fixed on the disk (236);
wherein the magnetic core (200) is sheathed on the tubular pin (290) and axially blocked between the disk (236) and a tubular magnetic core pressing member (252) of the tubular pin (290); and
wherein a bottom end of the first spring (225) abuttingly rests against a shoulder of the tubular magnetic core pressing member (252).

2. The pressure sensor (100) according to claim 1,
wherein the K value of the first spring (225) is in a range of 0.001-0.20N/mm; and
wherein the K value of the second spring (235) is in a range of 0.001-0.10N/mm.

3. The pressure sensor (100) according to claim 1 or 2,
wherein the housing (210) includes a first cup-shaped housing (224) and a second cup-shaped housing (228) snap-connected with each other to receive the deformable membrane (211) and form the first chamber (215) and the second chamber (212); and
wherein the pressure sensor (100) further comprises the winding (221) which is disposed above the first cup-shaped housing (224).

4. The pressure sensor (100) according to one of the preceding claims,
wherein the membrane (211) extends away from an edge of the membrane disk (237); and
wherein the second spring (235) exerts a force to a lower surface of the membrane disk (237).

5. The pressure sensor (100) according to claim 4,
wherein a top end of the second spring (235) contacts the lower surface of the membrane disk (237).

6. The pressure sensor (100) according to claim 5,
wherein the bottom end of the first spring (225) exerts a force to an upper surface of the deformable membrane (211), and the top end of the second spring (235) exerts a force to the lower surface of the deformable membrane (211).

7. The pressure sensor (100) according to one of claims 4 to 6,
wherein the second spring (235) is located on the side of the deformable membrane (211) opposite to the first spring and directly rests against the lower surface of the membrane disc (237).

8. The pressure sensor (100) according to one of the preceding claims,
wherein the pressure sensor (100) is placed vertically when in use, and the first spring (225) and the second spring (235) interact with each other in a vertical direction.

9. The pressure sensor (100) according to one of the preceding claims, wherein the force exerted by the first spring (225) is opposite to the force exerted by the second spring (235).

10. The pressure sensor (100) according to one of the preceding claims, further comprising:
- a flexible conduit (516) with an outlet of the flexible conduit (516) being positioned at the center of an air flue (502) and an inlet of the flexible conduit (516) being connected to the first chamber (215).

11. The pressure sensor (100) according to any one of the preceding claims,
wherein the movement of the deformable membrane (211) causes a corresponding movement of the magnetic core (200) and the winding (221), generating a pulse signal with variable amplitude and/or frequency through the inductance inductor (222).

12. A blower (820) comprising the pressure sensor (100) according to any one of claims 1 to 11 to control a wind supply speed of the blower (820).

## Patentansprüche

1. Drucksensor (100) zum Erfassen eines Winddrucks, umfassend:
- ein Gehäuse (210), in dem eine druckempfindliche verformbare Membran (211) untergebracht ist, wobei das Gehäuse (210) durch die Membran (211) luftdicht in eine erste Kammer (215) und eine zweite Kammer (212) geteilt wird;
- eine erste Feder (225);
- eine zweite Feder (235);
- einen Magnetkern (200), der aus einem ferromagnetischen Material gefertigt ist und funktionsfähig mit der Membran (211) verbunden ist, um sich als Reaktion auf die Verformung der Membran (211) zu bewegen;
- eine Wicklung (221), die funktionsfähig magnetoelektrisch mit dem Magnetkern (200) verbunden ist, um einen variablen Induktanzinduktor (222) zu bilden; und
- eine Scheibe (236) die in der ersten Kammer (215) auf der verformbaren Membran (211) angebracht ist;
- eine Membranscheibe (237), die in der zweiten Kammer (212) auf einer Seite der verformbaren Membran (211) entgegengesetzt zur Scheibe (236) angebracht ist; und
- einen röhrenförmigen Stift (290), der sich von einer Seite der Scheibe (236) in Richtung auf die Wicklung (221) erstreckt;
wobei der Drucksensor (100) mit einer ersten Entlüftungsöffnung (106) konfiguriert ist, durch welche die erste Kammer (215) in einer Strömungsverbindung mit einem ersten Luftdruck P1 in einem Luftstromkanal steht;
wobei der Drucksensor (100) mit einer zweiten Entlüftungsöffnung (104) konfiguriert ist, um die zweite Kammer (212) mit einem Atmosphärendruck P0 oder einem zweiten Luftdruck P2 in dem Luftstromkanal zu verbinden;
wobei die erste Entlüftungsöffnung (106) in einer Einstellschraube (250) angebracht ist, die einen Hohlraum (251) umfasst;
wobei ein erstes Ende des Hohlraums (251) in einer Luftstromverbindung mit der ersten Kammer (215) steht und wobei ein zweites Ende des Hohlraums (251) in einer Strömungsverbindung mit dem ersten Luftdruck P1 in dem Luftstromkanal steht;
wobei ein Ende (250d) der Einstellschraube (250) in einem Kontakt mit der ersten Feder (225) steht;
wobei der K-Wert der ersten Feder (225) K1 ist;
wobei der K-Wert der zweiten Feder (235) K2 ist;
wobei der Differenzwert (K1 - K2) zwischen K1 und K2 in einem Bereich von 0,001 bis 0,20 N/mm liegt;
wobei der Magnetkern (200) auf der Scheibe (236) angebracht, montiert, befestigt oder fixiert ist;
wobei der Magnetkern (200) den röhrenförmigen Stift (290) umhüllt und zwischen der Scheibe (236) und einem röhrenförmigen Magnetkerndruckelement (252) des röhrenförmigen Stifts (290) axial blockiert ist; und
wobei ein unteres Ende der ersten Feder (225) enganliegend an einer Schulter des röhrenförmigen Magnetkerndruckelements (252) ruht.

2. Drucksensor (100) nach Anspruch 1,
wobei der K-Wert der ersten Feder (225) in einem Bereich von 0,001 bis 0,20 N/mm liegt; und
wobei der K-Wert der zweiten Feder (235) in einem Bereich von 0,001 bis 0,10 N/mm liegt.

3. Drucksensor (100) nach Anspruch 1 oder 2,
wobei das Gehäuse (210) ein erstes kelchförmiges Gehäuse (224) und ein zweites kelchförmiges Gehäuse (228) aufweist, die durch einen Schnappverschluss miteinander verbunden sind, um die verformbare Membran (211) aufzunehmen und um die erste Kammer (215) und die zweite Kammer (212) zu bilden; und
wobei der Drucksensor (100) außerdem die Wicklung (221) umfasst, die über dem ersten kelchförmigen Gehäuse (224) angebracht ist.

4. Drucksensor (100) nach einem der vorhergehenden Ansprüche,
wobei sich die Membran (211) von einem Rand der Membranscheibe (237) aus erstreckt; und
wobei die zweite Feder (235) eine Kraft auf eine Unterseite der Membranscheibe (237) ausübt.

5. Drucksensor (100) nach Anspruch 4,
wobei ein oberes Ende der zweiten Feder (235) in einem Kontakt mit der Unterseite der Membranscheibe (237) steht.

6. Drucksensor (100) nach Anspruch 5,
wobei das untere Ende der ersten Feder (225) eine Kraft auf eine Oberseite der verformbaren Membran (211) ausübt und wobei das obere Ende der zweiten Feder (235) eine Kraft auf die Unterseite der verformbaren Membran (211) ausübt.

7. Drucksensor (100) nach einem der Ansprüche 4 bis 6,
wobei die zweite Feder (235) auf der zur ersten Feder entgegengesetzten Seite der verformbaren Membran (211) angebracht ist und direkt an der Unterseite der Membranscheibe (237) ruht.

8. Drucksensor (100) nach einem der vorhergehenden Ansprüche,
wobei der Drucksensor (100) im Betrieb vertikal angeordnet ist und wobei die erste Feder (225) und die zweite Feder (235) in einer vertikalen Richtung miteinander interagieren.

9. Drucksensor (100) nach einem der vorhergehenden Ansprüche,
wobei die von der ersten Feder (225) ausgeübte Kraft entgegensetzt zur von der zweiten (235) ausgeübten Kraft wirkt.

10. Drucksensor (100) nach einem der vorhergehenden Ansprüche, der außerdem umfasst:
- eine flexible Leitung (516), wobei ein Auslass der flexiblen Leitung (516) im Zentrum eines Luftkanals (502) positioniert ist und wobei ein Einlass der flexiblen Leitung (516) mit der ersten Kammer (215) verbunden ist.

11. Drucksensor (100) nach einem der vorhergehenden Ansprüche,
wobei die Bewegung der verformbaren Membran (211) eine entsprechende Bewegung des Magnetkerns (200) und der Wicklung (221) verursacht, wodurch ein Pulssignal mit einer variablen Amplitude und/oder Frequenz durch den Induktanzinduktor (222) erzeugt wird.

12. Gebläse (820), das den Drucksensor (100) nach einem der Ansprüche 1 bis 11 umfasst, um eine Windabgabegeschwindigkeit des Gebläses (820) zu steuern.

## Revendications

1. Capteur de pression (100) destiné à détecter la pression du vent, comprenant :
- une enveloppe (210) qui reçoit une membrane déformable sensible à la pression (211), l'enveloppe (210) étant divisée par la membrane (211) en un premier compartiment (215) et un second compartiment (212) en assurant l'étanchéité,
- un premier ressort (225),
- un second ressort (235),
- un noyau magnétique (200) constitué d'un matériau ferromagnétique et relié fonctionnellement à la membrane (211) pour se déplacer en réponse à la déformation de la membrane (211),
- un bobinage (221) relié fonctionnellement et de façon magnéto électrique au noyau magnétique (200) pour former une bobine d'inductance variable (222), et
- un disque (236) situé sur la membrane (211) déformable dans le premier compartiment (215),
- un disque à membrane (237) situé dans le second compartiment (212) sur un côté de la membrane (211) déformable à l'opposé du disque (236), et
- une broche tubulaire (290) s'étendant depuis un côté du disque (236) vers le bobinage (221),
où le capteur de pression (100) est configuré en comportant une première ouverture de ventilation d'air (106) au travers de laquelle le premier compartiment (215) est en communication par fluide avec une première pression d'air P1 dans un canal d'écoulement d'air, et
où le capteur de pression (100) est configuré en comportant une seconde ouverture de ventilation d'air (104) pour relier le second compartiment (212) à la pression atmosphérique P0 ou à une seconde pression d'air P2 dans le canal d'écoulement d'air,
où la première ouverture de ventilation d'air (106) est disposée dans une vis d'ajustement (250) comprenant une cavité (251),
où la première extrémité de la cavité (251) est en communication par l'air avec le premier compartiment (215), et où la seconde extrémité de la cavité (251) est en communication par fluide avec la première pression d'air P1 dans le canal d'écoulement d'air,
où une extrémité (250d) de la vis d'ajustement (250) est en contact avec le premier ressort (225),
où le coefficient K du premier ressort (225) est K1,
où le coefficient K du second ressort (235) est K2,
où la valeur de la différence (K1 - K2) entre les coefficients K1 et K2 se trouve dans la plage comprise entre 0,001 N/mm et 0,20 N/mm,
où le noyau magnétique (200) est situé, monté, attaché ou fixé sur le disque (236),
où le noyau magnétique (200) est enroulé sur la broche tubulaire (290) et bloqué axialement entre le disque (236) et un élément de compression de noyau magnétique tubulaire (252) de la broche tubulaire (290), et
où extrémité de fond du premier ressort (225) repose en butée contre un épaulement de l'élément de compression de noyau magnétique tubulaire (252).

2. Capteur de pression (100) selon la revendication 1,
dans lequel le coefficient K du premier ressort (225) se trouve dans la plage comprise entre 0,001 N/mm et 0,20 N/mm, et
dans lequel le coefficient K du second ressort (235) se trouve dans la plage comprise entre 0,001 N/mm et 0,10 N/mm.

3. Capteur de pression (100) selon la revendication 1 ou la revendication 2,
dans lequel l'enveloppe (210) inclut une première enveloppe en forme de coupelle (224) et une seconde enveloppe en forme de coupelle (228) reliées l'une à l'autre par pression dans le but de recevoir la membrane (211) déformable et former le premier compartiment (215) et le second compartiment (212), et
dans lequel le capteur de pression (100) comprend en outre l'enroulement (221) qui est disposé au-dessus de la première enveloppe en forme de coupelle (224).

4. Capteur de pression (100) selon l'une des revendications précédentes,
dans lequel la membrane (211) s'étend à distance du bord du disque à membrane (237), et
dans lequel le second ressort (235) exerce une force sur la surface inférieure du disque à membrane (237).

5. Capteur de pression (100) selon la revendication 4,
dans lequel l'extrémité supérieure du second ressort (235) est en contact avec la surface inférieure du disque à membrane (237).

6. Capteur de pression (100) selon la revendication 5,
dans lequel l'extrémité inférieure du premier ressort (225) exerce une force sur la surface supérieure de la membrane (211) déformable, et où l'extrémité supérieure du second ressort (235) exerce une force sur la surface inférieure de la membrane (211) déformable.

7. Capteur de pression (100) selon l'une des revendications 4 à 6,
dans lequel le second ressort (235) est situé sur le côté de la membrane (211) déformable à l'opposé du premier ressort et repose directement contre la surface inférieure du disque à membrane (237).

8. Capteur de pression (100) selon l'une des revendications précédentes,
dans lequel le capteur de pression (100) est placé verticalement lorsqu'il est en service, et où le premier ressort (225) interagit avec le second ressort (235) dans la direction verticale.

9. Capteur de pression (100) selon l'une des revendications précédentes,
dans lequel la force exercée par le premier ressort (225) est opposée à la force exercée par le second ressort (235) .

10. Capteur de pression (100) selon l'une des revendications précédentes, comprenant en outre :
- un conduit souple (516) comportant une ouverture de sortie de conduit souple (516) positionnée au centre d'un conduit d'air (502) et une ouverture d'entrée de conduit souple (516) reliée au premier compartiment (215) .

11. Capteur de pression (100) selon l'une quelconque des revendications précédentes,
dans lequel le mouvement de la membrane (211) déformable provoque un mouvement correspondant du noyau magnétique (200) et de la bobine (221) en générant un signal impulsionnel présentant une amplitude et/ou une fréquence variable au travers de la bobine d'inductance (222) .

12. Ventilateur (820) comprenant le capteur de pression (100) conforme à l'une quelconque des revendications 1 à 11 afin de piloter la vitesse d'alimentation en air du ventilateur (820).
